# EUROPÄISCHE PATENTANMELDUNG

(11) **EP 1 648 072 A2**
(43) Veröffentlichungstag der Anmeldung: **19.04.2006**
(21) Anmeldenummer: 05019797.9
(22) Anmeldetag: 12.09.2005
(51) Int. Cl.: H02K 1/14, H02K 3/34

(54) **Statoranordnung für eine elektrische Maschine und Elektromotor**

(30) Priorität: 15.10.2004 DE 102004050373
(71) Anmelder: MINEBEA Co., Ltd., Kitasaku-gun, Nagano-ken 3849-2100 (JP)
(72) Erfinder: Schill, Jürgen, 78073 Bad Dürrheim (DE)
(74) Vertreter: Liesegang, Eva

(57) **Zusammenfassung**

Statoranordnung für eine elektrische Maschine, umfassend einen Statorkörper mit einer Anzahl Statorzähne, zwischen denen Statornuten zur Aufnahme von Statorwicklungen gebildet sind, und mit einer Isolierschicht, die in wenigstens in dem Bereich der Statomuten, in dem die Statorwicklungen aufgenommen werden, auf die Statorzähne aufgebracht ist, wobei die Isolierschicht einteilig mit einem Gehäuse ausgebildet ist, das an den Statorkörper angespritzt ist, wobei Bereiche des Statorkörpers, die keine Statorwicklungen aufnehmen, wenigstens teilweise freiliegend bleiben.

## Beschreibung

Die Erfindung betrifft eine Statoranordnung für eine elektrische Maschine und einen Elektromotor. Die erfindungsgemäße Statoranordnung kann in vielen Arten elektrischer Maschinen, insbesondere Gleichstrommotoren und -generatoren eingesetzt werden.

Ein bevorzugtes Anwendungsgebiet der Erfindung sind bürstenlose Gleichstrommotoren und andere Permanentmagnetmotoren, die als Innenläufermotor oder Außenläufermotor konfiguriert sein können. Elektromotoren mit einer Innenläuferkonfiguration weisen einen Rotorrückschluß auf, der auf eine Welle aufgebracht ist, sowie einen oder mehrere Permanentmagnete, die auf den Rotorrückschluß aufgebracht oder in diesen eingebettet sind. Ferner umfassen die Motoren eine Statoranordnung aus z.B. einer Anzahl paketierter Metallbleche, die einen ringförmigen Statorrückschluß bilden, von dem Statorzähne radial nach innen abstehen. Die Statorzähne bilden die Statorpole, zwischen denen Statornuten zur Aufnahme von Statorwicklungen gebildet sind. Die Rotoranordnung ist koaxial in die Statoranordnung eingefügt. Bei einer Außenläuferkonfiguration umgibt die Rotoranordnung den Stator koaxial.

Es ist üblich, daß Rotor und Stator in einem Gehäuse aufgenommen sind, das wenigstens einen stirnseitigen Flansch zur Befestigung des Motors aufweist.

Bei den meisten Motoren besteht der Stator aus einem genuteten Blechpaket, wobei die Statorwicklungen, beispielsweise aus isoliertem Kupferdraht, in den Nuten des Stators aufgenommen werden. Die Statornuten müssen vor dem Bewickeln des Stators elektrisch isoliert werden. Hierzu ist es bekannt, z.B. im Wege der Pulverbeschichtung oder via Spritzguß, eine Isolierschicht auf die Nuten aufzubringen. Ein anderer Ansatz besteht darin, Spulenträger aus Kunststoff auf die Statorzähne aufzubringen oder Kunststoffscheiben über die Nuten zu stülpen.

Aus der DE 197 40 938 A1 ist ein bürstenloser Gleichstrommotor bekannt, dessen Statorkörper in dem Bereich der Statorzähne, in dem die Statorwicklungen aufgenommen sind, eine Isolierschicht aufweist. Die Isolierschicht wird auf den Statorkörper durch Kunststoffspritzen aufgebracht, und einstückig mit der Isolierschicht wird ein Trägerelement für Anschlußkontakte, mit welchen die Enden der Wicklungen verbunden sind, ausgebildet. Der Gleichstrommotor ist in einem separaten Gehäuse aufgenommen.

Aus der DE 102 54 670 A1 ist ein Elektromotor für einen Pumpenantrieb bekannt, bei dem der Stator in einen Kunststoffkörper eingebettet ist und der Kunststoffkörper zusammen mit dem Stator einen Raum bildet, in dem der Rotor aufgenommen wird, wobei dieser Raum an einem Stirnende geschlossen ist und der Rotor an dem gegenüberliegenden Stirnende mit einem Pumpenrad verbunden ist. Durch diese Anordnung wird ein bei Pumpenmotoren üblicher Spalttopf überflüssig, und der Kunststoffkörper bildet zusätzlich einenTeil des Motorgehäuses. Der in der DE 102 54 670 A1 beschriebene Elektromotor hat jedoch den Nachteil, daß die Wärmeabfuhr in dem Stator nach außen nicht optimal ist.

Es ist die Aufgabe der Erfindung, eine Statoranordnung für eine elektrische Maschine und einen Elektromotor anzugeben, die mit geringem Aufwand und Kosten hergestellt werden können und gute Eigenschaften hinsichtlich der Wärmeabfuhr des Stators haben.

Diese Aufgabe wird durch eine Statoranordnung mit den Merkmalen von Anspruch 1 sowie durch einen Elektromotor gemäß Anspruch 9 gelöst.

Die Erfindung sieht eine Statoranordnung für eine elektrische Maschine vor, die einen Statorkörper mit einer Anzahl Statorzähne, zwischen denen Statornuten zur Aufnahme von Statorwicklungen gebildet sind, aufweist. Die Statorzähne sind wenigstens in dem Bereich der Statomuten, in dem die Statorwicklungen aufgenommen werden, mit einer Isolierschicht versehen, um den Statorkörper gegen die Statorwicklungen zu isolieren. Erfindungsgemäß ist die Isolierschicht einteilig mit einem Gehäuse ausgebildet, das an den Statorkörper angespritzt ist; hierbei bleiben Bereiche des Statorkörpers, welche keine Statorwicklungen aufnehmen, wenigstens teilweise freiliegend. Vorzugsweise ist der Statorkörper mit Innenläuferkonfiguration ausgebildet. In dieser bevorzugten Ausführung bildet der Statorkörper einen Rückschlußring, von dem Statorzähne nach innen radial abstehen. Die Isolierschicht und das Gehäuse sind derart an den Statorkörper angespritzt, daß die Außenfläche des Rückschlußrings freiliegt. Dadurch kann ein Motorgehäuse direkt an den Stator angeformt werden und gleichwohl eine gute Wärmeabfuhr von dem Stator nach außen gewährleistet werden. Die Isolation der Statornuten und die Herstellung des Gehäuses in einem Arbeitsschritt können kostengünstig realisiert werden.

An das Gehäuse sind vorzugsweise Verbindungselemente zur Verbindung des Gehäuses mit wenigstens einem Flansch angeformt. Beispielsweise können Rastelemente, Ausnehmungen und/oder Bohrungen an dem Gehäuse vorgesehen sein, um einen oder zwei stirnseitige Flansche mit dem Gehäuse zu verbinden. In einer alternativen Ausführung kann ein Flansch direkt an einer Stirnseite des Gehäuses angeformt sein. Durch diese Maßnahme wird die Montage des Elektromotors mit der erfindungsgemäßen Statoranordnung nochmals vereinfacht.

Die Erfindung sieht auch einen Elektromotor mit einer Statoranordnung der oben beschriebenen Art vor, wobei das Gehäuse derart an den Statorkörper angespritzt ist, daß es zwei Gehäuseabschnitte an den gegenüberliegenden Stirnenden des Statorkörpers aufweist, die vorzugsweise mit der Außenfläche des Rückschlußrings des Statorkörpers im wesentlichen fluchten. Dadurch erhält man eine besonders kompakte und platzsparende Motorkonfiguration, bei der der Statorkörper Wärme nach außen abgeben kann. Ein separates Gehäuse muß nicht vorgesehen werden.

Die Erfindung ist im folgenden mit Bezug auf bevorzugte Ausführungen anhand der Zeichnungen näher erläutert. In den Figuren zeigen:
- Fig. 1: eine schematische perspektivische Darstellung eines Statorkörpers gemäß dem Stand der Technik;
- Fig. 2: eine schematische perspektivische Darstellung einer Statoranordnung gemäß der Erfindung, mit Blick auf ein erstes Stirnende der Statoranordnung;
- Fig. 3: eine perspektivische Darstellung der Statoranordnung gemäß der Erfindung, mit Blick auf ein zweites, gegenüberliegendes Stirnende der Statoranordnung;
- Fig. 4a: eine Stirnansicht der erfindungsgemäßen Statoranordnung, wobei das erste Stirnende gezeigt ist;
- Fig. 4b: eine Längsschnittdarstellung durch die erfindungsgemäße Statoranordnung entlang der Linie A-A in Fig. 4a;
- Fig. 4c: eine weitere Stirnansicht der erfindungsgemäßen Statoranordnung, wobei das gegenüberliegende zweite Stirnende gezeigt ist:
- Fig. 5: eine perspektivische Explosionsdarstellung eines Elektromotors gemäß der Erfindung.

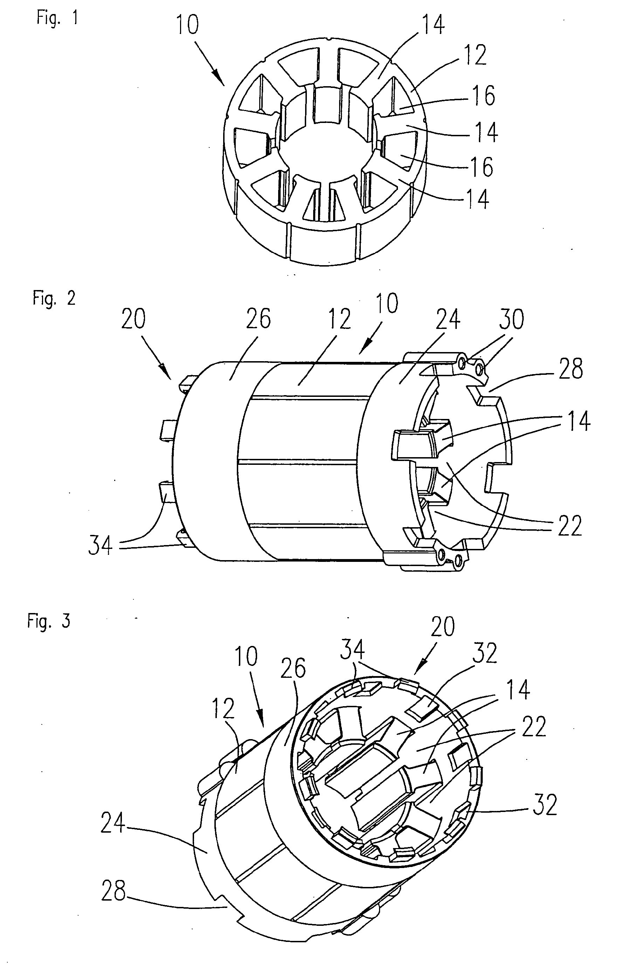

Fig. 1 zeigt eine perspektivische Darstellung eines Statorkörpers gemäß dem Stand der Technik, wie er auch in der erfindungsgemäßen Statoranordnung verwendet werden kann. Der Statorkörper 10 umfaßt einen Rückschlußring 12 und von dem Rückschlußring 12 nach innen radial abstehende Statorzähne 14. Zwischen den Statorzähnen 14 sind Statornuten 16 gebildet, welche Statorwicklungen (in den Figuren nicht gezeigt) aufnehmen, die um die Statorzähne 14 gewickelt werden.

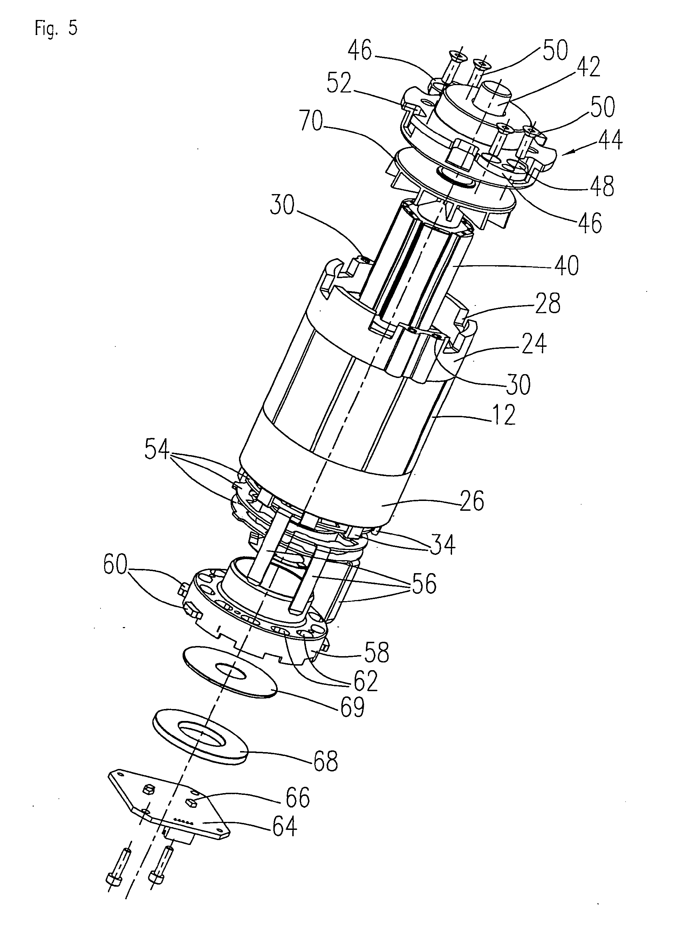

Fig. 2 und 3 zeigen jeweils eine perspektivische Darstellung der erfindungsgemäßen Statoranordnung mit Blickrichtung auf eine erste bzw. eine zweite Stirnseite der Statoranordnung. Die erste Stirnseite entspricht der Abtriebsseite des Elektromotors, und die zweite Stirnseite entspricht der Stromversorgungsseite des Elektromotors, wie mit Bezug auf Fig. 5 deutlicher werden wird.

Die Statoranordnung umfaßt einen Statorkörper 10 mit einem Rückschlußring 12 und Statorzähnen 14. An den Statorkörper 10 ist ein Gehäusekörper 20, vorzugsweise aus Kunststoff, angeformt, der eine Isolierschicht 22 in den Statornuten und stirnseitige Gehäuseabschnitte 24, 26 umfaßt. Die Isolierschicht 22 wird vorzugsweise so ausgebildet, daß der Boden der Statornuten und die Statorzähne vollständig umspritzt sind, die Vorderseite der Statorzähne, welche dem Rotor zugewandt sind, jedoch frei bleiben, um den Luftspalt zwischen Stator und Rotormagneten nicht unnötig zu vergrößern.

Der Gehäusekörper 20 ist vorzugsweise so ausgebildet, daß die beiden stirnseitigen Gehäuseabschnitte 24, 26 mit der Außenfläche des Rückschlußringes 12 fluchten und sich unmittelbar an diese anschließen. Dadurch bildet die Statoranordnung eine nach außen abgeschlossene Einheit, und es ist kein zusätzliches separates Gehäuse notwendig. An den Gehäuseabschnitt 24, der dem Abtriebsende der Statoranordnung entspricht, sind Ausnehmungen 28 und Bohrungen 30 ausgebildet, welche dazu dienen, einen A-Flansch, d.h. abtriebsseitigen Flansch, zu positionieren und zu befestigen, wie mit Bezug auf Fig. 5 näher erläutert ist.

An dem gegenüberliegenden Gehäuseabschnitt 26, bei dem die Stromversorgung des Elektromotors angeordnet wird, sind ebenfalls Ausnehmungen 32 sowie Rastnasen 34 vorgesehen, die mit einem B-Flansch auf der gegenüberliegenden Stirnseite des Elektromotors zusammenwirken, wie ebenfalls mit Fig. 5 deutlicher werden wird.

Erfindungsgemäß wird somit eine Statoranordnung vorgesehen, bei welcher der Gehäusekörper 20 zusammen mit der Isolierschicht 22 in einem Arbeitsgang an den Statorkörper 10 angeformt wird, wobei dieser Gehäusekörper 20 zusammen mit der Außenfläche des Rückschlußrings 12 des Statorkörpers 10 eine geschlossene Außenwand für den Elektromotor bildet. Ferner sind an den Gehäusekörper 20 stirnseitig Mittel zur Verbindung des Gehäusekörpers mit zwei Flanschen angeformt. In einer alternativen Ausführung der Erfindung, die in den Figuren nicht gezeigt ist, könnte eine der stirnseitigen Flansche einteilig mit dem Gehäusekörper 20 ausgebildet werden. Der Gehäusekörper 20 und die Isolierschicht 22 werden vorzugsweise als ein Kunststoff-Spritzgußteil hergestellt.

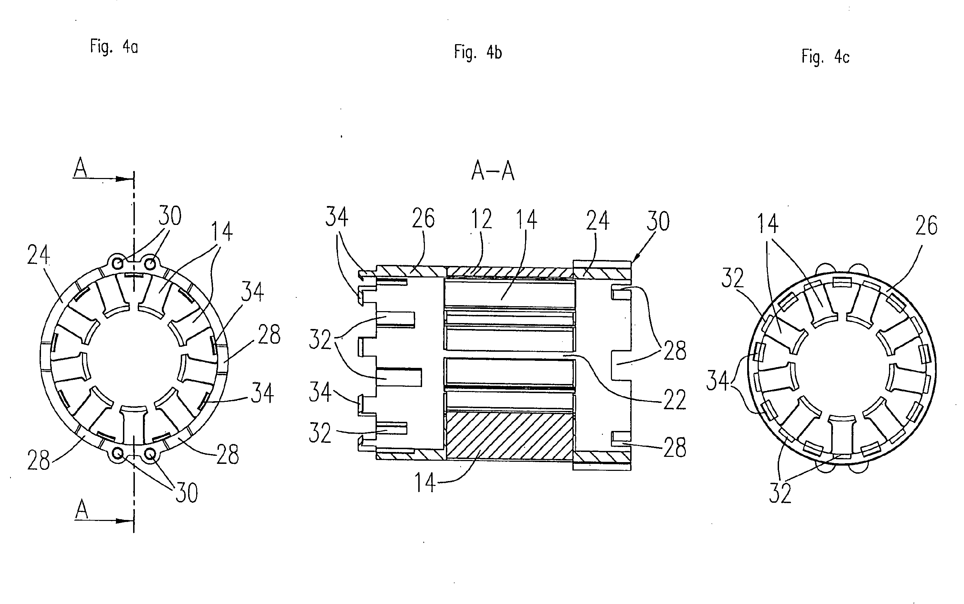

Die Fig. 4a bis 4c zeigen zwei Stirnansichten sowie eine Längsschnittdarstellung durch den erfindungsgemäßen Statorkörper. Korrespondierende Elemente sind mit denselben Bezugszeichen wie in den Fig. 1 bis 3 gekennzeichnet.

Fig. 5 zeigt eine perspektivische Explosionsdarstellung eines Elektromotors, der die erfindungsgemäße Statoranordnung aufweist. Korrespondierende Teile sind mit denselben Bezugszeichen wie in den Fig. 1 bis 3 gekennzeichnet.

In die Statoranordnung ist ein Rotor 40 koaxial eingefügt, der auf eine Welle 42 aufgebracht ist. An dem Abtriebsende des Motors, das bei dem Gehäuseabschnitt 24 liegt, ist ein sogenannter A-Flansch 44 angeordnet, der in Flanschabschnitten 46 Bohrungen 48 aufweist, die mit den Bohrungen 30 des Gehäuseabschnitts 24 in Deckung gebracht werden. Der A-Flansch 44 kann mittels Schrauben 50, Nieten oder ähnlichen Verbindungselementen durch die Bohrungen 48, 30 mit dem Gehäuseabschnitt 24 verbunden werden. In der gezeigten Ausführung hat der A-Flansch 44 an seinem Umfang Ausnehmungen 52, welche mit den Ausnehmungen 28 an dem Gehäuseabschnitt 24 fluchten. Die Ausnehmungen 52, 28 dienen als Lüftungsschlitze zum Durchlaß von Luft, welche mittels eines Lüfterrades 70 bewegt wird, um den Gleichstrommotor zu belüften und zu kühlen.

Auf der gegenüberliegenden Seite des Elektromotors, bei dem Gehäuseabschnitt 26, der der Stromversorgung des Motors zugeordnet ist, sind in der Ausführung der Fig. 5 drei Lead Frames oder Anschlußringe 54 dargestellt, die zur Kontaktierung der Phasenwicklungen des Elektromotors (nicht gezeigt) dienen. Die Anschlußringe weisen jeweils Anschlußfahnen 56 auf, die nach der Montage des Elektromotors aus dem Gehäuse herausgeführt sind und zum Anschließen einer Stromversorgung dienen. Die Anschlußringe 54 werden durch die Ausnehmungen 32 in dem Gehäuseabschnitt 26 gehalten. Der Gehäuseabschnitt 26 wird durch einen Deckel oder B-Flansch 58 abgeschlossen, wobei der B-Flansch 58 Vorsprünge 60 aufweist, welche als Höhenanschlag auf dem Gehäusekörper 30 dienen.. Nachdem der B-Flansch 58 auf den Gehäuseabschnitt 26 aufgebracht ist, wird er dort mittels der Rastnasen 34 gehalten. Der B-Flansch 58 weist Durchbrechungen 62 zum Ansaugen der zur Belüftung dienenden Luft auf. Die Anschlußfahnen 56 werden am äußeren Umfang des Flansches 58 entlang nach außen geführt.

Auf der Seite der Stromversorgung wird der Elektromotor durch eine Leiterplatte 64 abgeschlossen. Auf der Leiterplatte 64 sind Hallsensoren oder andere Magnetsensoren 66 zur Erfassung der Drehlage des Motors angeordnet. Die Hallsensoren 66 wirken mit einer Steuermagnetscheibe 68 zusammen, die auf einem magnetischen Rückschlußring 69 montiert und mit der Motorwelle 42 drehfest verbunden ist, um die zur Steuerung des Elektromotors notwendigen Kommutierungssignale zu erzeugen. Die Steuermagnetscheibe 68 ist auf der den Hallsensoren 66 zugewandten Seite des ferromagnetischen Rückschlußrings 69 angeordnet, so daß Hallsensoren und Steuermagnet einander zugewandt sind.

Durch die erfindungsgemäße Statoranordnung erhält man einen Elektromotor, der kompakt ist und simpel und kostengünstig hergestellt werden kann. Insbesondere benötigt der Elektromotor kein separates Gehäuse, und die Isolationsschicht der Statornuten sowie die Gehäuseabschnitte können in einem Arbeitsschritt hergestellt werden. Dabei ist der Gehäusekörper so ausgebildet, daß er eine optimale Wärmeabgabe des Stators nach außen erlaubt. Ferner ist der Gehäusekörper zweckmäßig so ausgebildet, daß die Montage des Motors mit Anschlußringen und stirnseitigen Flanschen sehr einfach ist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 10: Statorkörper
- 12: Rückschlußring
- 14: Statorzähne
- 16: Statornuten
- 20: Gehäusekörper
- 22: Isolierschicht
- 24, 26: stirnseitige Gehäuseabschnitte
- 28: Ausnehmungen
- 30: Bohrungen
- 32: Ausnehmungen
- 34: Rastnasen
- 40: Rotor
- 42: Welle
- 44: A-Flansch
- 46: Flanschabschnitte
- 48: Bohrungen
- 50: Schrauben
- 52: Ausnehmungen
- 54: Lead Frames, Anschlußringe
- 56: Anschlußfahnen
- 58: Gehäusedeckel, B-Flansch
- 60: Vorsprünge
- 62: Durchbrechungen
- 64: Platine
- 66: Hallsensoren
- 68: Steuermagnetscheibe
- 69: Rückschlußring
- 70: Lüfterrad

## Patentansprüche

1. Statoranordnung für eine elektrische Maschine, umfassend einen Statorkörper (10) mit einer Anzahl Statorzähne (14), zwischen denen Statornuten (16) zur Aufnahme von Statorwicklungen gebildet sind, und mit einer Isolierschicht (22), die in wenigstens in dem Bereich der Statornuten (16), in dem die Statorwicklungen aufgenommen werden, auf die Statorzähne (14) aufgebracht ist, wobei die Isolierschicht (22) einteilig mit einem Gehäusekörper (20) ausgebildet ist, der an den Statorkörper (10) angespritzt ist, wobei Bereiche des Statorkörpers (10), die keine Statorwicklungen aufnehmen, wenigstens teilweise freiliegend bleiben.

2. Statoranordnung nach Anspruch 1, **dadurch gekennzeichnet, daß** der Statorkörper (10) durch ein Blechpaket gebildet ist.

3. Statoranordnung nach Anspruch 1 oder 2, **dadurch gekennzeichnet, daß** der Statorkörper (10) im wesentlichen nur im Bereich der Statorzähne (14) umspritzt ist.

4. Statoranordnung nach einem der vorangehenden Ansprüche, **dadurch gekennzeichnet, daß** der Statorkörper (10) an seiner von den Statorzähnen (14) abgewandten Oberfläche freiliegt.

5. Statoranordnung nach einem der vorangehenden Ansprüche, **dadurch gekennzeichnet, daß** der Gehäusekörper (20) stirnseitige Gehäuseabschnitte (24, 26) aufweist.

6. Statoranordnung nach Anspruch 5, **dadurch gekennzeichnet, daß** die stirnseitigen Gehäuseabschnitte (24, 26) Verbindungselemente (30; 34) zur Verbindung des Gehäuses mit wenigstens einem Flansch (44; 58) aufweisen.

7. Statoranordnung nach Anspruch 6, **dadurch gekennzeichnet, daß** die Verbindungselemente Rastelemente (34), Ausnehmungen und/oder Bohrungen (30) umfassen.

8. Statoranordnung nach einem der Ansprüche 1 bis 5, **dadurch gekennzeichnet, daß** ein Flansch an einer Stirnseite des Gehäusekörpers (20) angeformt ist.

9. Statoranordnung nach einem der vorangehenden Ansprüche, **dadurch gekennzeichnet, daß** der Statorkörper (10) eine Innenläuferkonfiguration mit einem Rückschlußring (12) und von dem Rückschlußring (12) nach innen radial abstehenden Statorzähnen (14) aufweist, wobei die Isolierschicht (22) und der Gehäusekörper (20) derart an den Statorkörper (10) angespritzt sind, daß die Außenfläche des Rückschlußrings (12) freiliegt.

10. Elektromotor mit einer Statoranordnung nach Anspruch 9, **dadurch gekennzeichnet, daß** der Gehäusekörper (20) zwei Gehäuseabschnitte (24, 26) an den gegenüberliegenden Stirnenden des Statorkörpers (10) aufweist, die mit der Außenfläche des Rückschlußrings (12) im wesentlichen fluchten.
